# EUROPÄISCHE PATENTSCHRIFT

(11) **EP 1 022 209 B1**
(45) Veröffentlichungstag und Bekanntmachung des Hinweises auf die Patenterteilung: **19.03.2003**
(21) Anmeldenummer: 99124832.9
(22) Anmeldetag: 14.12.1999
(51) Int. Cl.: B62D 3/12, B62D 5/22

(54) **Lenkgetriebegehäuse für Kraftfahrzeuge**
Steering gear housing for motor vehicles
Carter de boîtier de direction pour véhicules à moteur

(30) Priorität: 21.01.1999 DE 19902291
(43) Veröffentlichungstag der Anmeldung: 26.07.2000
(73) Patentinhaber: Volkswagen Aktiengesellschaft, 38436 Wolfsburg (DE)
(72) Erfinder: Jamke, Andre, 38118 Braunschweig (DE)

(56) Entgegenhaltungen:
- EP-A- 0 241 691
- EP-A- 0 340 896
- WO-A-95/21087
- DE-A- 4 201 730

## Beschreibung

Die Erfindung bezieht sich auf ein Lenkgetriebegehäuse in Metall/Kunststoffkonstruktion für Kraftfahrzeuge.

Aus der DE 42 01 730 A1 ist ein Lenkgetriebegehäuse für Kraftfahrzeuge bekannt geworden, welches vollständig aus Metall im Innenhochdruckverfahren (IHU-Verfahren) hergestellt ist. Solche Getriebegehäuse lassen sich sehr kostengünstig herstellen und weisen eine hohe Festigkeit auf. Leider sind diese Lenkgetriebegehäuse aber sehr schwer, was für den Einsatz in Kraftfahrzeugen unerwünscht ist.

In der DE 38 17 335 A1 ist ein Lenkgetriebegehäuse offenbart, welches vollständig aus Kunststoff hergestellt ist. Derartige Lenkgetriebegehäuse sind sehr leicht, haben sich aber in der Praxis aus Lebensdauergründen als unzweckmäßig erwiesen.

Weiterhin sind aus dem gattungsgemässen Dokument WO 95/21087 und der EP 0 340 896 A2 Lenkgetriebegehäuse in Metall/Kunststoffkonstruktion bekannt.

Hiervon ausgehend beabsichtigt die Erfindung eine alternative Konstruktion mit geringem Gewicht und hoher Festigkeit zu schaffen.

Dazu wird ein Lenkgetriebegehäuse mit den Merkmalen des Patentanspruches 1 vorgeschlagen.

Das erfindungsgemäße Lenkgetriebegehäuse verbindet auf überraschend einfache Weise die Vorteile eines vollständig aus Metall hergestellten Lenkgetriebegehäuses mit denen eines Lenkgetriebegehäuses aus Kunststoff. Tragende Eigenschaften werden im wesentlichen von dem Gerippe aus Metall übernommen, wodurch sich eine hohe Lebensdauer ergibt. Durch den Kunststoffmantel ist ein geringes Eigengewicht gewährleistet.

Nach einer Weiterbildung der Erfindung ist das Gerippe einstückig im Innenhochdruckverfahren hergestellt. Bereiche hoher Beanspruchung können ebenso wie Gewindebohrungen aufweisende Bereiche als Teil des Gerippes aus Metall hergestellt sein.

Das Gerippe selbst weist nach einer konstruktiven Ausgestaltung in Längsrichtung eines Lenkschubstangengehäuses gesehen am Umfang verteilte Längsrippen auf. Vorzugsweise sind drei Längsrippen vorgesehen. Darüberhinaus kann das Lenkgetriebegehäuse noch in Umfangsrichtung verlaufende Querrippen aufweisen.

Die Erfindung wird nachfolgend anhand eines in der Zeichnung dargestellten Ausführungsbeispiels näher erläutert. In der Zeichnung zeigen:
- Fig. 1: ein Lenkgetriebegehäuse mit den Erfindungsmerkmalen in Vorderansicht, teilweise geschnitten,
- Fig. 2: einen Schnitt durch das Lenkgetriebegehäuse gemäß Fig. 1 in der Ebene II - II.

Das in der Zeichnung dargestellte Lenkgetriebegehäuse weist ein Lenkspindelgehäuse 1 und ein einstückig mit diesem verbundenes Lenkschubstangengehäuse 2 auf. In dem Lenkspindelgehäuse sind ein Ritzellager 3, ein in das Lenkschubstangengehäuse 2 übergehendes Zahnstangenrohr 4 und ein Sitz 5 für ein Druckstück, durch welches das Spiel zwischen einer Zahnstange des Lenkgetriebes und dem Lenkritzel eingestellt wird, vorgesehen. Innerhalb des Zahnstangenrohrs 4 sind zusätzlich Anschläge (nicht dargestellt) für die Begrenzung der Bewegung der Zahnstange vorgesehen. Das Lenkschubstangengehäuse 2 weist zwei Anschlüsse 6 und 7 auf. Diese dienen zum Anschluß von Druckleitungen der Lenkkraftunterstützung.

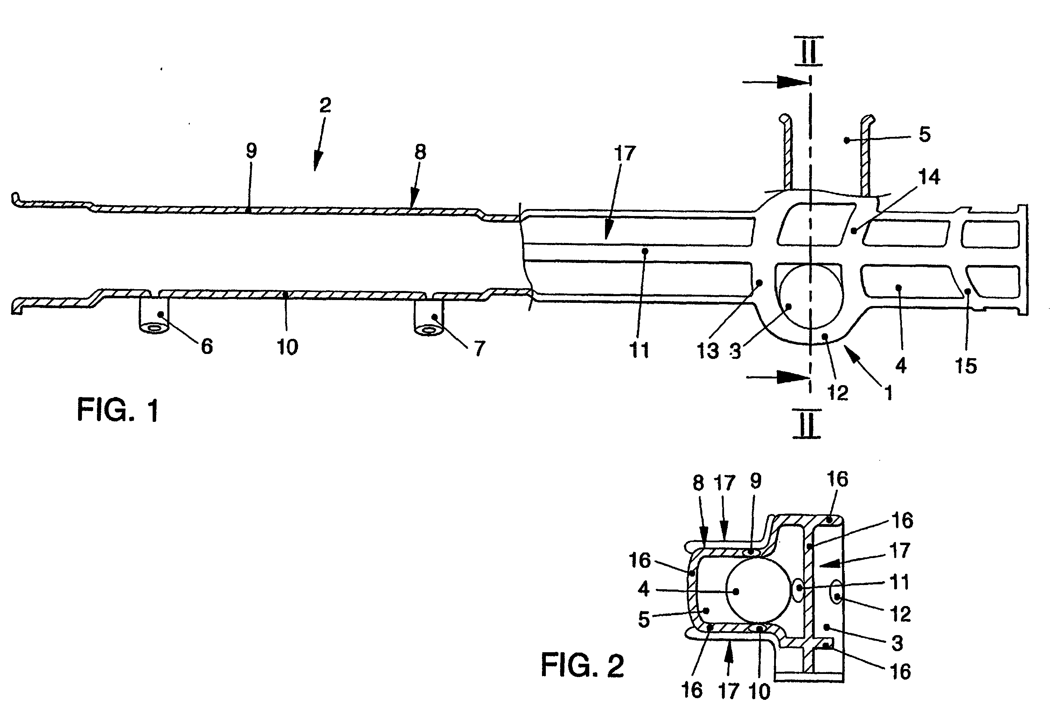

Das Lenkgetriebegehäuse ist aus einem Gerippe aus Metall hergestellt. Im Bereich des Lenkschubstangengehäuses 2 sind drei am Umfang verteilte Längsrippen 9, 10 und 11 angeordnet. Die Längsrippen 9 und 10 sind dabei um 180° versetzt zueinander an der Ober- und Unterseite des Lenkschubstangengehäuses 2 und die Längsrippe 11 um 90° versetzt zu den beiden Längsrippen 9 und 10 an der Seite des Lenkschubstangengehäuses 2 angeordnet (Fig. 2). Die Längsrippen 9, 11 erstrecken sich über die gesamte Länge des Lenkgetriebegehäuses, also des Lenkschubstangengehäuses 2, zusammen mit dem Zahnstangenrohr 4. Im Bereich des Zahnstangenrohrs 4 ist eine weitere Längsrippe 12 an der dem Ritzellager 3 gegenüberliegenden Seite der Längsrippe 11 vorgesehen.

Im Bereich des Lenkspindelgehäuses 1 sind in Umfangsrichtung verlaufende Querrippen 13 und 14 sowie eine zusätzliche Querrippe 15 im Bereich des Zahnstangenrohres 4 vorgesehen. Weitere Querrippen können, falls erforderlich, im Bereich des Lenkschubstangengehäuses 2 angeordnet sein. Die Querrippen 13..15 sind ringartig ausgebildet.

Da der Bereich des Ritzellagers 3 zu den stark beanspruchten Bereichen des Lenkgetriebegehäuses gehört, sind hier weitere Rippen 16 vorgesehen. Dieser Bereich ist sozusagen als Teil des Gerippes 8 aus Metall hergestellt.

Auch die am Schubstangengehäuse 2 angeordneten Anschlüsse 6 und 7 sind aus Metall hergestellt. Sie können einstückig an die Längsrippe 10 angeformt oder als Rohrstück an der Längsrippe 10 angebracht sein. Da sie ein Innengewinde zur Aufnahme der Druckanschlüsse aufweisen, reißt das auf diese Weise aus Metall hergestellte Gewinde nicht so leicht aus.

Das insoweit beschriebene Gerippe 8 wird zur Herstellung des vollständigen Lenkgetriebegehäuses mit einem Kunststoffmantel 17 überzogen, vorzugsweise umspritzt. Dabei werden Ausnehmungen zwischen den einzelnen Rippen 9..16 ausgefüllt, so daß sich ein geschlossenes Gehäuse ergibt.

Das Gerippe 8 aus Metall ist in vorliegendem Beispiel im Innenhochdruckverfahren hergestellt worden. Nach einer ersten Variante wird eine spezielle Form gewählt, in die das bereits mit Ausnehmungen versehene, noch rohrartig ausgebildete Gerippe eingelegt und sodann geformt wird. Nach einer zweiten Variante wird das Gerippe zunächst aus einem geschlossenen Rohr im Innenhochdruckverfahren geformt und sodann die Ausnehmungen ausgeschnitten.

### BEZUGSZEICHENLISTE

- 1: Lenkspindelgehäuse
- 2: Lenkschubstangengehäuse
- 3: Ritzellager
- 4: Zahnstangenrohr
- 5: Sitz
- 6: Anschluß
- 7: Anschluß
- 8: Gerippe
- 9: Längsrippe
- 10: Längsrippe
- 11: Längsrippe
- 12: Bogenrippe
- 13: Querrippe
- 14: Querrippe
- 15: Querrippe
- 16: Rippe
- 17: Kunststoffmantel

## Patentansprüche

1. Lenkgetriebegehäuse in Metall/Kunststoffkonstruktion für Kraftfahrzeuge, **dadurch gekennzeichnet, daß** das Lenkgetriebegehäuse (1) ein tragendes Gerippe (8) aus Metall mit mehreren einzelnen, Längsrippen (9...12) und zwischen diesen befindlichen Ausnehmungen aufweist, sowie einen Kunststoffmantel (17), mit dem das Gerippe (8) überzogen und zu einem Gehäuse geschlossen ist, wobei auch die Ausnehmungen zwischen den einzelnen Längsrippen (9... 12) ausgefüllt sind.

2. Lenkgetriebegehäuse nach Anspruch 1, **dadurch gekennzeichnet, daß** das Gerippe (8) einstückig im Innenhochdruckverfahren hergestellt ist.

3. Lenkgetriebegehäuse nach Anspruch 1 oder 2, **dadurch gekennzeichnet, daß** Bereiche hoher Beanspruchung als Teil des Gerippes (8) aus Metall hergestellt sind.

4. Lenkgetriebegehäuse nach einem der Ansprüche 1 bis 3, **dadurch gekennzeichnet, daß** Gewindebohrungen aufweisende Bereiche, insbesondere Anschlüsse (6, 7), als Teil des Gerippes (8) aus Metall hergestellt sind.

5. Lenkgetriebegehäuse nach einem der Ansprüche 1 bis 4, **dadurch gekennzeichnet, daß** ein Lenkschubstangengehäuse (2) vorgesehen ist und das Gerippe (8) in Längsrichtung des Lenkschubstangengehäuses (2) gesehen am Umfang verteilte Längsrippen (9, 10, 11) aufweist, die jeweils eine Ausnehmung begrenzen.

6. Lenkgetriebegehäuse nach Anspruch 5, **dadurch gekennzeichnet, daß** das Gerippe (8) drei am Umfang verteilte Längsrippen (9, 10, 11) aufweist.

7. Lenkgetriebegehäuse nach Anspruch 6, **dadurch gekennzeichnet, daß** zwei Längsrippen (9, 10) um 180 Grad versetzt zueinander an der Ober- und Unterseite des Lenkschubstangengehäuses (2) und eine weitere Längsrippe (11) um 90 Grad versetzt zu den beiden erstgenannten Längsrippen (9, 10) an der Seite des Lenkschubstangengehäuses (2) angeordnet ist.

8. Lenkgetriebegehäuse nach einem der Ansprüche 1 bis 7, **dadurch gekennzeichnet, daß** das Gerippe (8) in Längsrichtung des Lenkschubstangengehäuses (2) gesehen hintereinander angeordnete, in Umfangsrichtung verlaufenden Querrippen (13, 14, 15) aufweist, die jeweils eine Ausnehmung begrenzen.

## Claims

1. Steering-gear housing of metal/plastic construction for motor vehicles, **characterized in that** the steering-gear housing (1) has a metal supporting ribbing (8) with a plurality of individual longitudinal ribs (9...12) and recesses located between these, and also a plastic casing (17) with which the ribbing (8) is covered and is closed to form a housing, the recesses between the individual longitudinal ribs (9...12) also being filled.

2. Steering-gear housing according to Claim 1, **characterized in that** the ribbing (8) is produced in one piece by the internal high-pressure method.

3. Steering-gear housing according to Claim 1 or 2, **characterized in that** regions of high stress are produced from metal as part of the ribbing (8).

4. Steering-gear housing according to one of Claims 1 to 3, **characterized in that** regions, in particular connections (6, 7), having threaded bores are produced from metal as part of the ribbing (8)

5. Steering-gear housing according to one of Claims 1 to 4, **characterized in that** a steering push-rod housing (2) is provided, and the ribbing (8) has, as seen in the longitudinal direction of the steering push-rod housing (2), longitudinal ribs (9, 10, 11) which are distributed on the circumference and which in each case delimit a recess.

6. Steering-gear housing according to Claim 5, **characterized in that** the ribbing (8) has three longitudinal ribs (9, 10, 11) distributed on the circumference.

7. Steering-gear housing according to Claim 6, **characterized in that** two longitudinal ribs (9, 10) are arranged, offset at 180° to one another, on the top side and the underside of the steering push-rod housing (2), and a further longitudinal rib (11) is arranged, offset at 90° in relation to the two first-mentioned longitudinal ribs (9, 10), on the side of the steering push-rod housing (2).

8. Steering-gear housing according to one of Claims 1 to 7, **characterized in that** the ribbing (8) has, as seen in the longitudinal direction of the steering push-rod housing (2), transverse ribs (13, 14, 15) which are arranged one behind the other and run in the circumferential direction and which in each case delimit a recess.

## Revendications

1. Carter de boîtier de direction en construction métal/plastique pour véhicules à moteur, **caractérisé en ce que** le carter de boîtier de direction (1) présente une ossature (8) portante en métal comprenant plusieurs nervures longitudinales individuelles (9...12) et des évidements se trouvant entre celles-ci, ainsi qu'une enveloppe en plastique (17), avec laquelle l'ossature (8) est recouverte et fermée pour donner un carter, les évidements étant également remplis entre les nervures longitudinales individuelles (9...12).

2. Carter de boîtier de direction selon la revendication 1, **caractérisé en ce que** l'ossature (8) est fabriquée d'une seule pièce par un procédé haute pression intérieure.

3. Carter de boîtier de direction selon la revendication 1 ou 2, **caractérisé en ce que** des régions de plus forte sollicitation sont fabriquées en métal en tant que partie de l'ossature (8).

4. Carter de boîtier de direction selon l'une quelconque des revendications 1 à 3, **caractérisé en ce que** des régions présentant des alésages filetés, en particulier des raccords (6, 7), sont fabriquées en métal en tant que partie de l'ossature (8).

5. Carter de boîtier de direction selon l'une quelconque des revendications 1 à 4, **caractérisé en ce qu'**il est prévu un carter de bielle de direction (2) et l'ossature (8), vue dans la direction longitudinale du carter de bielle de direction (2), présente des nervures longitudinales (9, 10, 11) réparties sur la périphérie, qui limitent chacune un évidement.

6. Carter de boîtier de direction selon la revendication 5, **caractérisé en ce que** l'ossature (8) présente trois nervures longitudinales (9, 10, 11) réparties sur la périphérie.

7. Carter de boîtier de direction selon la revendication 6, **caractérisé en ce que** deux nervures longitudinales (9, 10) sont décalées de 180 degrés l'une par rapport à l'autre sur le côté supérieur et le côté inférieur du carter de bielle de direction (2) et une autre nervure longitudinale (11) est décalée de 90 degrés par rapport aux deux premières nervures longitudinales (9, 10) du côté du carter de bielle de direction (2).

8. Carter de boîtier de direction selon l'une quelconque des revendications 1 à 7, **caractérisé en ce que** l'ossature (8) présente, vue dans la direction longitudinale du carter de bielle de direction (2), des nervures transversales (13, 14, 15) s'étendant dans la direction périphérique, disposées les unes derrière les autres, qui limitent chacune un évidement.
